# EUROPÄISCHE PATENTSCHRIFT

(11) **EP 0 446 388 B1**
(45) Veröffentlichungstag und Bekanntmachung des Hinweises auf die Patenterteilung: **10.08.1994**
(21) Anmeldenummer: 90104751.4
(22) Anmeldetag: 13.03.1990
(51) Int. Cl.: B60P 1/64, B60P 7/13

(54) **Wechselbehälter-Transporteinrichtung sowie Befestigungseinrichtung für auf einem Trägerfahrzeug angeordnete Wechselbehälter**
Exchangeable container device as well as a fixing device for such a container positioned on a carrying vehicle
Dispositif de transport pour conteneurs interchangeables ainsi que dispositif de fixation pour conteneur interchangeable disposé sur un véhicule de transport

(43) Veröffentlichungstag der Anmeldung: 18.09.1991
(73) Patentinhaber: Kögel Fahrzeugwerke Aktiengesellschaft, D-89016 Ulm (DE)
(72) Erfinder: Strobel, Georg,, D-7900 Ulm-Wiblingen, (DE); Häge, Walter,, D-7900 Ulm/Donau (DE)
(74) Vertreter: Kohlmann, Karl Friedrich, Dipl.-Ing.

(56) Entgegenhaltungen:
- FR-A- 1 563 025
- FR-A- 2 311 685
- US-A- 2 656 196
- US-A- 2 942 912
- US-A- 3 259 400
- US-A- 3 565 013

## Beschreibung

Die vorliegende Erfindung betrifft eine Wechselbehälter-Transporteinrichtung
- mit zumindest einem Trägerfahrzeug,
- Wechselbehältern, die auf das Trägerfahrzeug aufsetzbar sind,
- und einer Befestigungseinrichtung, die am Trägerfahrzeug angeordnet ist und eine Zentriereinrichtung zum Ausrichten und Fixieren der Wechselbehälter in Fahrzeuglängs- und Fahrzeugquerrichtung sowie eine Verriegelungseinrichtung zum lösbaren Festspannen der Wechselbehälter auf dem Trägerfahrzeug umfaßt.

Die vorliegende Erfindung betrifft ferner eine Befestigungseinrichtung für auf einem Trägerfahrzeug angeordnete Wechselbehälter.

Unter dem Begriff "Trägerfahrzeug" werden nicht nur Lastkraftwagen, sondern auch Anhänger oder sogenannte "Flats" oder dergleichen Einrichtungen zur Aufnahme von Wechselbehältern verstanden.

Unter dem Begriff "Wechselbehälter" werden Frachtbehälter jeder Bauart in Form von geschlossenen Aufbauten, wie z.B. der Kofferbauart, oder in Form von offenen Aufbauten, wie z.B. der Pritschenbauart mit und ohne Verdeck oder in Tankbauart verstanden.

Wechselbehälter-Transporteinrichtungen der bekannten Art dienen meist zum Transport von Wechselbehältern genormter Bauart (z.B. DIN 70013 oder EN 284). Hierzu sind die Trägerfahrzeuge mit sogenannten Twist-Lock-Befestigungseinrichtungen ausgestattet, die vier Drehzapfen aufweisen, welche jeweils im Bereich der Ecken des Trägerfahrzeuges gemäß DIN 70014 angeordnet sind und die sowohl die Zentrierfunktion zum Ausrichten und Fixieren der Wechselbehälter in Fahrzeuglängs- und Fahrzeugquerrichtung, als auch die Verriegelungsfunktion zum lösbaren Festspannen der Wechselbehälter auf dem Trägerfahrzeug übernehmen.

Wechselbehälter genormter Bauart können aufgrund ihrer Größe häufig hinsichtlich ihrer Ladekapazität nicht voll ausgenutzt werden. Aufgrund ihrer Größe sind sie darüber hinaus innerbetrieblich häufig nicht ohne aufwendige Transport- oder Kransysteme transportierbar. Auch können mit bestimmten Trägerfahrzeugen je nach Typ und Ausführung stets nur bestimmte Wechselbehälter transportiert werden. Einige genormte Wechselbehälter entsprechen ferner nicht dem zu einem lückenlosen Stauen von Euro-Paletten erforderlichen Rastermaß, so daß ungenützte Toträume entstehen, was ebenfalls zu Lasten der vollen Ausnutzung der Ladekapazität gehen.

Es sind deshalb bereits Wechselbehälter kleinerer Bauart entwickelt worden, die sich wegen des geringeren Aufnahmevolumens besser als große Wechselbehälter auslasten lassen. Auch sind diese kleineren Wechselbehälter aufgrund ihrer Größe innerbetrieblich mittels Gabelstaplern transportier- und deshalb einfacher als genormte Wechselbehälter handhabbar. Problematisch ist bei derartigen Wechselbehältern kleiner Bauart jedoch die Befestigung auf dem Trägerfahrzeug. Herkömmliche und bewährte Twist-Lock-Befestigungseinrichtungen lassen sich nicht einsetzen, da diese bei kleinen Wechselbehälterabmessungen zwangsläufig auch im Bereich der Radachsen angeordnet werden müssten. In diesem Bereich steht nur ein beschränkter Raum zur Verfügung, der die Befestigung und Bedienung der Twist-Lock-Befestigungseinrichtungen erschwert und an manchen Stellen sogar unmöglich macht. Auch lassen sich bestimmte Befestigungspunkte nicht festlegen, da die Trägerfahrzeuge zu unterschiedlich aufgebaut sind und besonders bei mehrachsigen Trägerfahrzeugen die Anzahl der möglichen Befestigungsstellen sehr eingeschränkt ist. Darüber hinaus darf die Befestigungseinrichtung für die Wechselbehälter kleiner Bauart nicht mit der Befestigungseinrichtung für die am jeweiligen Transportfahrzeug einsetzbaren genormten Wechselbehälter kollidieren.

Aufgabe der vorliegenden Erfindung ist es, eine vollkommen neuartige Wechselbehälter-Transporteinrichtung sowie eine Befestigungseinrichtung für auf einem Trägerfahrzeug angeordnete Wechselbehälter zu schaffen, die technisch einfach und betriebsicher aufgebaut ist, mit herkömmlichen Befestigungseinrichtungen für genormte Wechselbehälter nicht kollidiert, sich problemlos an jeder Art von Trägerfahrzeug befestigen und dabei derart am Trägerfahrzeug anordnen läßt, daß nach einem Modulsystem aufgebaute kleinere Wechselbehälter in unterschiedlicher Größe in jeder beliebigen Kombination am Trägerfahrzeug festgelegt werden können.

Diese Aufgabe wird bei einer Wechselbehälter-Transporteinrichtung der eingangs beschriebenen Art dadurch gelöst,
- daß die Wechselbehälter zumindest im Bereich ihrer Unterkanten in Fahrzeuglängsrichtung mit einer geraden durchlaufenden Profilschiene ausgestattet sind,
- daß die Zentriereinrichtung mittig am Trägerfahrzeug und die Verriegelungseinrichtung von dieser getrennt seitlich am Trägerfahrzeug angeordnet ist
- und daß die Verriegelungseinrichtung an die Profilschiene über deren Länge an jeder Stelle ankoppelbar ist.

Für eine Befestigungseinrichtung für auf einem Trägerfahrzeug angeordnete Wechselbehälter wird diese Aufgabe erfindungsgemäß dadurch gelöst, daß die Befestigungseinrichtung
- aus einer mittig am Trägerfahrzeug befestigbaren Zentriereinrichtung,
- einer seitlich am Trägerfahrzeug befestigbaren Verriegelungseinrichtung
- sowie einer geraden durchlaufenden Profilschiene besteht, die am Wechselbehälter im Bereich dessen Unterkante befestigbar oder in diesen integrierbar ist, sich zumindest über dessen Länge in Trägerfahrzeuglängsrichtung erstreckt und an der die Verriegelungseinrichtung an jeder Stelle ankoppelbar ist.

Bei bekannten Konstruktionen sind die Zentriereinrichtung zum Ausrichten und Fixieren der Wechselbehälter in Fahrzeuglängs- und Fahrzeugquerrichtung sowie die Verriegelungseinrichtung zum lösbaren Festspannen der Wechselbehälter auf dem Trägerfahrzeug stets in der jeweiligen Befestigungseinrichtung zusammengefaßt. Mit anderen Worten: Jede Befestigungseinrichtung besitzt am jeweiligen Befestigungspunkt eine Zentrier- und eine Verriegelungseinrichtung.

Der Erfindung liegt nun der Gedanke zugrunde, die Zentriereinrichtung und die Verriegelungseinrichtung räumlich zu trennen, derart, daß in der Fahrzeugmitte die Zentriereinrichtung und die Verriegelungseinrichtung von dieser getrennt jeweils seitlich am Trägerfahrzeug angeordnet ist. Durch diese räumliche Trennung der beiden Funktionen ergibt sich für die Verriegelungsfunktion erstmalig eine erhebliche Anordnungsfreiheit dergestalt, daß dem jeweiligen Typ und der Ausführung des Trägerfahrzeugs entsprechend die Verriegelungseinrichtung praktisch an jeder Stelle des Trägerfahrzeuges angeordnet werden kann, da sie nur noch niederhaltende Funktion hat, wodurch zudem ein technisch relativ einfacher Aufbau realisiert werden kann.

Um dieser Anordnungsfreiheit Rechnung zu tragen, sind die Wechselbehälter erfindungsgemäß mit über die gesamte Wechselbehälterlänge durchlaufenden geraden Profilschienen ausgestattet, sodaß eine Ankopplung der Verriegelungseinrichtung an jeder Stelle des Wechselbehälters möglich ist.

Ist die Transporteinrichtung nach einem Modulsystem aufgebaut, das Wechselbehälter relativ kleiner Abmessungen vorsieht, ist es vorteilhaft, die Verriegelungseinrichtung aus einer Anzahl von im Abstand nebeneinander angeordneten, separaten und getrennt voneinander betätigbaren Verriegelungseinheiten zu bilden. Diese können dann dem jeweiligen Modulrastermaß entsprechend am Trägerfahrzeug befestigt werden.

Grundsätzlich kann die mittig am Trägerfahrzeug angeordnete Zentriereinrichtung in verschiedenster Weise ausgebildet sein. Vorteilhaft ist es, wenn die Zentriereinrichtung von einer Anzahl von Zentrierstücken gebildet ist, die im Abstand entlang der Längsachse des Trägerfahrzeuges angeordnet bzw. befestigbar sind.

Für die grundsätzlichen Funktionen reicht es aus, wenn die Profilschiene lediglich an den in Fahrzeuglängsrichtung laufenden Unterkanten des Wechselbehälters angeordnet ist. Es kann jedoch vorteilhaft sein, die Profilschiene sowohl in Fahrzeuglängs- als auch in Fahrzeugquerrichtung am Wechselbehälter vorzusehen und auf diese Weise einen umlaufenden Grund- oder Bodenrahmen zu bilden. Eine derartige Anordnung ist insbesondere bei in der Grundfläche quadratischen Wechselbehältern zweckmäßig, da diese dann im Raster von jeweils 90° gedreht, d.h. injeder Stellung auf dem Trägerfahrzeug angeordnet werden können.

Sofern ein umlaufender Grund- oder Bodenrahmen vorgesehen ist, kann die in Fahrzeugquerrichtung verlaufende Profilschiene im Zusammenhang mit der Zentriereinrichtung eingesetzt werden. So ist es vorteilhaft, wenn die in Fahrzeugquerrichtung verlaufende Profilschiene Anschläge aufweist, die derart angeordnet sind, daß sie sich bei aufgesetztem Wechselbehälter seitlich an der Zentriereinrichtung abstützen. Auf diese Weise übernimmt dieser Teil der Profilschiene die Aufgabe des am Wechselbehälter anzuordnenden Teiles der Zentriereinrichtung.

Bei entsprechender Ausbildung kann der Grund- oder Bodenrahmen auch als Tragrahmen ausgestaltet werden, der alle wesentlichen auf den Wechselbehälter einwirkenden Kräfte aufnimmt.

Grundsätzlich können die Zentrierstücke in verschiedenster Weise ausgestaltet sein. Vorteilhaft ist es, die Zentrierstücke in Form von mit Führungsflächen ausgestatteten Zentrierklötzen oder Zentriertürmen auszubilden. Eine besonders zweckmäßige Ausgestaltung ergibt sich, wenn die Zentrierklötze bzw. Zentriertürme pyramidenstumpfförmig ausgebildet sind.

Durch die Anordnung der Führungsflächen ergibt sich eine Justierung der Wechselbehälter beim Aufsetzen auf das Trägerfahrzeug bereits aufgrund des Wechselbehältereigengewichtes. Die genaue Justierung und Ausrichtung der Wechselbehälter auf dem Trägerfahrzeug erfolgt somit zwangsläufig bzw. automatisch beim Aufsetzvorgang.

Bei der Anordnung von mehreren Wechselbehältern auf einem Trägerfahrzeug ist es vorteilhaft, wenn die Wechselbehälter einen geringen Abstand zueinander aufweisen. Bei entsprechender Anordnung der Zentrierstücke wird dieser Abstand automatisch eingehalten und die Distanzierung der Wechselbehälter im vorgegebenen Umfang zwangsläufig erreicht. Durch das Einhalten eines vorgegebenen Abstandes wird einer Beschädigung beim Verladevorgang mittels Stapler oder Kran vorgebeugt.

Aufgrund ihrer Anordnung im Bereich der Fahrzeugmitte kollidieren Zentriereinrichtungen der erfindungsgemäßen Art nicht mit einer Befestigungseinrichtung für einen genormten Wechselbehälter. Gemäß DIN 70013 bzw. EN 284 muß nämlich jeder genormte Wechselbehälter auf seiner Unterseite mittig mit einem in den Abmessungen genau vorgegebenen Freiraum, dem sogenannten Zentriertunnel ausgestattet sein. Die erfindungsgemäßen Zentriereinrichtungen in Form der Zentrierstücke, Zentrierklötze, Zentriertürme oder dergleichen Einrichtungen liegen somit in einem Freiraum. Um das Trägerfahrzeug für unterseitig flache Aufbauten zusätzlich nutzen zu können, ist es vorteilhaft, die Zentriereinrichtungen wie beispielsweise die Zentrierstücke oder dergleichen abnehmbar auszubilden.

Für die durchlaufende Profilschiene können grundsätzlich verschiedene Profilformen eingesetzt werden. Besonders vorteilhaft ist es, wenn die Profilschiene aus einem U- oder C-Profil besteht, dessen Innenraum jeweils nach außen zur Seitenfläche des Wechselbehälters hin offen ist.

Besonders vorteilhaft ist es, wenn der untere Schenkel des U- oder C-Profiles kürzer ist als der obere Schenkel. Aufgrund des auf diese Weise gebildeten Rücksprunges oder Absatzes ragt der an die Profilschiene angreifende Teil der Verriegelungseinrichtung nicht über die durch die Länge des oberen Schenkels gebildete Kontur hinaus, so daß die maximal zulässige Breite (2500 mm) des Wechselbehälters ohne Rücksicht auf Teile der Verriegelungseinrichtung ausgenutzt werden kann.

Vorteilhaft ist es ferner, daß der kürzere Schenkel einen hochgezogenen Rand oder Wulst aufweist. Auf diese Weise ist sichergestellt, daß das am Profil angreifende Teil der Verriegelungseinrichtung beim Spannvorgang nicht vom Profil abrutschen kann.

Die Verriegelungseinheiten können konstruktiv in verschiedenster Weise ausgestaltet sein. Eine besonders einfache und auch von ungeschultem Bedienungspersonal jederzeit gut handhabbare sowie in ihrer Funktion durch einen einfachen Blick kotrollierbare Verriegelungseinheit ist mit einem Verriegelungshaken ausgestattet, der an dem U- oder C-Profil angreift.

Wirdein U- oder C-Profil mit einem kürzeren unteren Schenkel und damit mit einem auf diese Weise gebildeten Rücksprung eingesetzt, ist es vorteilhaft, daß der Verriegelungshaken am kürzeren Schenkel des U- oder C-Profiles angreift.

Um die zum Festspannen der Wechselbehälter auf dem Trägerfahrzeug erforderliche Spannkraft zu erzeugen, ist es vorteilhaft, wenn der Verriegelungshaken über eine Spanneinrichtung betätigbar ist. Diese Spanneinrichtung kann technisch in verschiedener Weise ausgestaltet sein. Eine besonders vorteilhafte Ausgestaltung ergibt sich, wenn die Spanneinrichtung als Kniehebel- oder Exzenteranordnung ausgebildet ist.

Um sicherzustellen, daß auch bei gelöster Verriegelungseinrichtung der Verriegelungshaken nicht über die Außenkontur des Trägerfahrzeuges hinausragt, ist es zweckmäßig, den Verriegelungshaken nach unten umklappbar zu lagern. Zweckmäßig ist es in einem solchen Fall, eine Feder vorzusehen, die derart am Verriegelungshaken angreift, daß der Verriegelungshaken sowohl in seiner Einsatzstellung als auch in seiner nach unten geklappten Stellung in Richtung einer auf die Trägerfahrzeugmitte hin gerichteten Zugkraft ausgesetzt ist.

Je nach Ladevolumen ist es vorteilhaft, pro Wechselbehälter zumindest zwei Verriegelungseinheiten vorzusehen. Aufgrund der erfindungsgemäßen Anordnungsfreiheit kann im Bedarfsfall pro Wechselbehälter jederzeit auch eine Mehrzahl von Verriegelungseinheiten vorgesehen werden.

Im Falle des Einsatzes von Zentrierstücken, beispielsweise in Form von Zentrierklötzen oder Zentriertürmen kann die überwiegende Fläche der Wechselbehälterunterseite glattflächig ausgebildet werden. Damit ergibt sich der Vorteil, daß im Bedarfsfalle ein innerbetrieblicher Transport oder eine Handhabung auch auf Laufrollen in allen Richtungen möglich ist.

Grundsätzlich können die Wechselbehälter in jeder beliebigen Weise ausgeführt sein. So ist sowohl ein geschlossener als auch ein offener Aufbau möglich. Bei einem geschlossenen Aufbau können die Wände der Wechselbehälter aus Blech, Plywood, Aluminium oder dergleichen hergestellt oder der gesamte Wechselbehälter als Isolierbehälter ausgestaltet sein. Bei einem offenem Aufbau kann z.B. ein Pritschenaufbau ohne oder mit Verdeck gewählt werden.

Im folgenden sind zur weiteren Erläuterung und zum besseren Verständnis Ausführungsbeispiele der Erfindung unter Bezugnahme auf die beigefügten Zeichnungen näher beschrieben und erläutert.
- Fig. 1a, 1b und 1c: zeigen ein und dasselbe Trägerfahrzeug, das jeweils mit Wechselbehältern unterschiedlicher Größe beladen ist,
- Fig. 2a, 2b und 2c: zeigen ein und denselben Gliederzug, der jeweils mit Wechselbehältern unterschiedlicher Größe beladen ist,
- Fig. 3a bis 3e: zeigen Beispiele der Um- und Absetztechnik von Wechselbehälter-Transporteinrichtungen der erfindungsgemäßen Art,
- Fig. 4, 5 und 6: zeigen in einer Seitenansicht, einer Draufsicht sowie einer teilweise geschnittenen Vorderansicht in stark vereinfachter Darstellung die wesentlichen Elemente einer Zentriereinrichtung in Form eines Zentrierklotzes,
- Fig. 7: zeigt in verkleinertem Maßstab einen Zentrierklotz gemäß Fig. 6 bei Beladung mit einem Norm-Wechselbehälter,
- Fig. 8 und 9: zeigen schematisch in einer Seitenansicht in Fahrzeuglängsrichtung und einer Draufsicht ein bevorzugtes Ausführungsbeispiel einer Verriegelungseinheit einer Verriegelungseinrichtung.

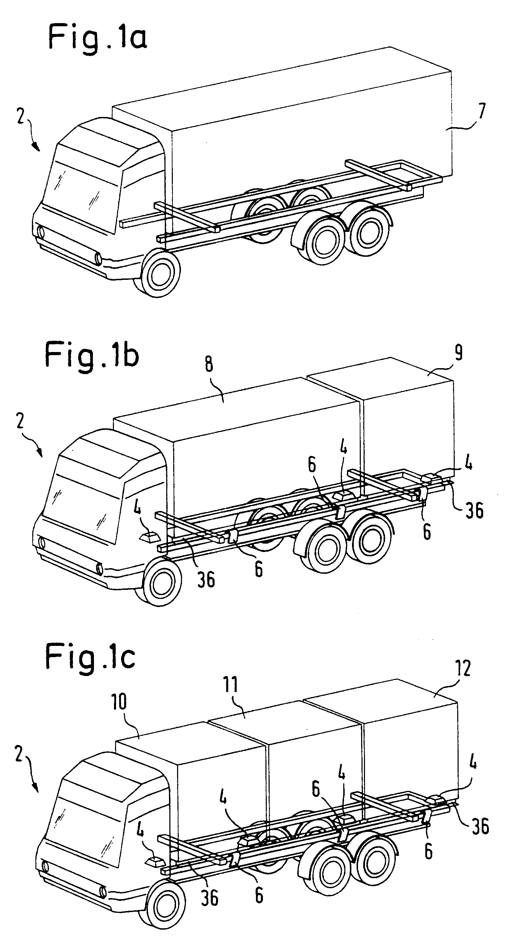

In den Fig. 1a bis 1c ist ein Trägerfahrzeug 2 in Form eines Lastwagens dargestellt. Bei dem in Fig. 1a dargestellten Beispiel trägt der Lastwagen einen herkömmlichen großvolumigen Wechselbehälter 7 mit einer Länge von 7820 mm, der entsprechend der eingangs erwähnten Euro-Norm ausgebildet ist. Dieser Wechselbehälter wird mit in Fig. 1a nicht dargestellten Twist-Lock-Befestigungseinrichtungen auf dem Trägerfahrzeugrahmen zentriert und verriegelt.

Die Fig. 1b und 1c zeigen den Lastwagen gemäß Fig. 1a in einer Beladung mit verschiedenen kleinvolumigen Wechselbehältern 8 bis 12. Während bei der Beladung gemäß Fig. 1b ein größerer Wechselbehälter 8 mit einem kleineren Wechselbehälter 9 kombiniert ist, trägt der Lastwagen im Falle der Beladung nach Fig. 1c drei gleich große kleine Wechselbehälter 10 bis 12. Der Wechselbehälter 8 hat bei dem in Fig. 1b dargestellten Beladungsbeispiel eine Länge von 5000 mm, während die Wechselbehälter 9 bis 12 eine Länge von 2500 mm aufweisen.

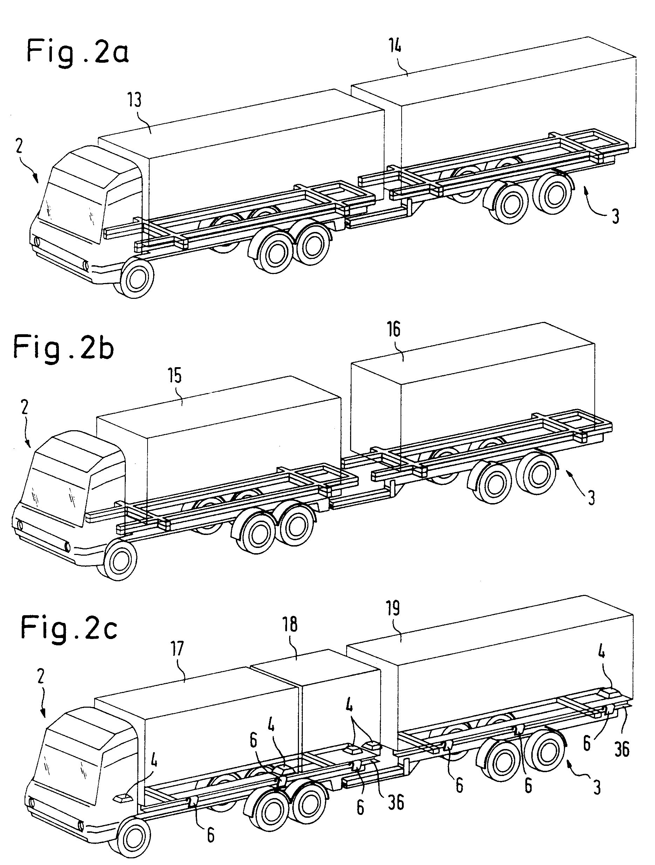

Bei den in den Fig. 2a bis 2c dargestellten Gliederzugsystemen besteht die Anordnung jeweils aus einem Trägerfahrzeug 2 in Form eines Lastwagens und einem Trägerfahrzeug 3 in Form eines Anhängers. Während das Gliederzugsystem nach Fig. 2a zwei Wechselbehälter 13, 14 gemäß DIN 70013 bzw. EN 284 mit einer Länge von jeweils 7150 mm bzw. 7820 mm trägt, sind bei dem Gliederzugsystem gemäß Fig. 2b zwei Wechselbehälter 15, 16 gemäß DIN 70013 mit einer Länge von jeweils 7150 mm angeordnet. Besonders beim Gliederzugsystem gemäß Fig. 2b ist augenfällig, wie schlecht die Ladefläche ausgenutzt ist.

Das Gliederzugsystem gemäß Fig. 2c wiederum ist im Bereich des Anhängers mit einem Wechselbehälter 19 gemäß DIN 70013 mit einer Länge von 7820 mm beladen, während die Ladefläche des Lastwagens einen größeren Wechselbehälter 17 mit 5000 mm und einen kleineren Wechselbehälter 18 mit 2500 mm Lange trägt.

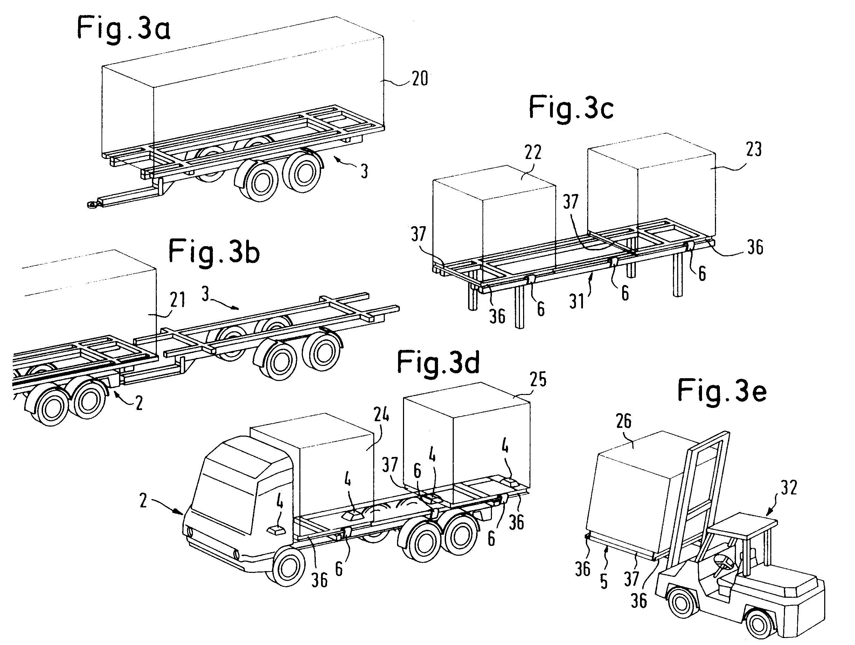

Im Zusammenhang mit den in den Fig. 3a bis 3e dargestellten Beispielen der Um- und Absetztechnik ist in Fig. 3c ein sog. Flat 31 dargestellt, der mit insgesamt drei kleinen Wechselbehältern 22, 26, 23 mit einer Länge von 2500 mm beladen war. Von einem Gabelstapler 32 wurde - wie aus Fig. 3e hervorgeht - der Wechselbehälter 26 vom Flat 31 abgenommen, um auf dem in Fig. 3d dargestellten Lastwagen zwischen zwei Wechselbehältern 4, 6 gleicher Größe abgesetzt zu werden. Ein mit drei kleinen Wechselbehältern oder in anderer Weise beladener Flat 31 kann selbstverständlich auch von dem in Fig. 3b dargestellten Anhänger 3 übernommen werden, dessen Lastwagen 2 im vorliegenden Beladungsbeispiel mit einem Wechselbehälter 21 gemäß DIN 70013 beladen ist, welcher über Twist-Lock-Befestigungseinrichtungen auf dem Lastwagen 2 festgelegt ist. Fig. 3a wiederum zeigt einen Beladezustand, in dem der Anhänger 3 ebenfalls mit einem großen Wechselbehälter 20 beladen, der über Twist-Lock-Befestigungseinrichtungen befestigt ist.

Sofern es sich gemäß der erfindungsgemäßen Wechselbehältertransporteinrichtung um kleinere Wechselbehälter 8 bis 12 bzw. 22 bis 26 handelt, sind diese zumindest im Bereich ihrer in Fahrzeuglängsrichtung verlaufenden Unterkanten mit einer Profilschiene 36 ausgestattet. Diese in Längsrichtung verlaufende Profilschiene 36 ist lediglich aus Fig. 3e im Zusammenhang mit dem Wechselbehälter 26 genauer dargestellt und in den übrigen Figuren lediglich angedeutet.

Neben der in Längsrichtung verlaufenden Profilschiene 36 kann jeder Wechselbehälter auch eine in Querrichtung verlaufende Profilschiene 37 aufweisen. In einem solchen Falle wird durch die Profilschiene 36 und 37 ein umlaufender Grund- oder Bodenrahmen 5 gebildet, der bei entsprechender Ausbildung und entsprechenden Abmessungen dem Wechselbehälter eine hohe Festigkeit verleiht.

Soweit es sich nicht um Wechselbehälter nach DIN 70013 oder EN 284 handelt, sind die Wechselbehälter 8 bis 12 und 22 bis 26 mit einer erfindungsgemäßen Befestigungseinrichtung am Trägerfahrzeug 2 bzw. 3 befestigt. Diese Befestigungseinrichtung umfaßt jeweils eine Zentriereinrichtung 4 und eine Verriegelungseinrichtung 6, die gemäß dem der Erfindung zugrundeliegenden Gedanken getrennt am Trägerfahrzeug 2 bzw. 3 befestigt sind. Die Zentriereinrichtung 4 ist dabei jeweils mittig am Trägerfahrzeug befestigt, während die Verriegelungseinrichtung 6 seitlich am Trägerfahrzeug angeordnet ist.

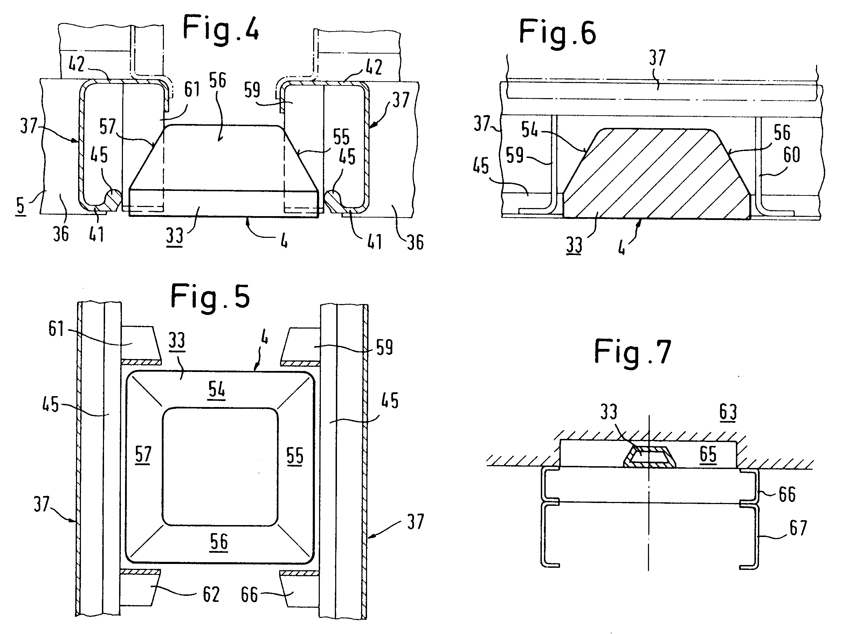

Ein bevorzugtes Ausführungsbeispiel einer Zentriereinrichtung 4 ist in den Fig. 4 bis 6 dargestellt.

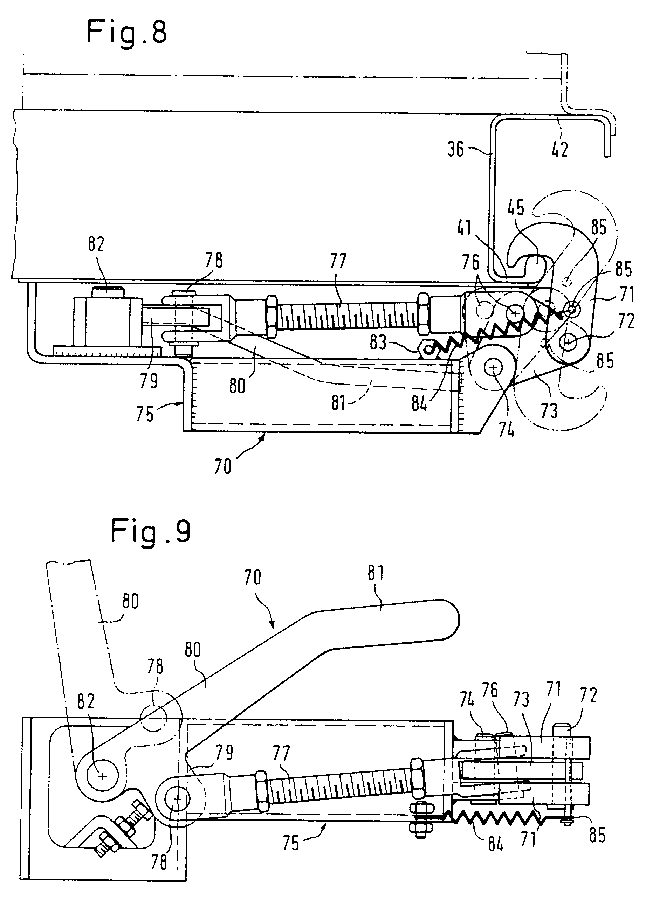

Vorteilhafterweise besteht die Verriegelungseinrichtung 6 aus einer Anzahl von Verriegelungseinheiten 70 und eine bevorzugte Ausführungsform einer derartigen Verriegelungseinheit 70 ist in den Fig. 8 und 9 dargestellt.

Wie bereits beschrieben, sind die Wechselbehälter bei den in den Figuren dargestellten Ausführungsbeispielen im Bereich ihrer Unterkante sowohl in Fahrzeuglängsrichtung mit einer geraden Profilschiene 36 als auch in Fahrzeugquerrichtung mit einer Profilschiene 37 ausgestattet, die gemeinsam den Grundrahmen 5 bilden. Im vorliegenden Ausführungsbeispiel bestehen die Profilschienen 36, 37 aus einem U- oder C-Profil, dessen Innenraum, wie aus den Fig. 4 und 8 hervorgeht, zur Außenseite des Wechselbehälters hin offen ist. Bei dem in den Figuren dargestellten Ausführungsbeispiel ist der untere Schenkel 41 des U- oder C-Profiles kürzer als der obere Schenkel 42. Der untere kürzere Schenkel 41 besitzt dabei an seinem freien Ende einen Wulst 45, dessen Funktion später noch beschrieben wird.

Die in Fahrzeugquerrichtung verlaufende Profilschiene 37 ist - wie aus den Fig. 4 und 5 hervorgeht - mit Anschlägen 59 bis 62 ausgestattet.

Die Zentriereinrichtung 4 wiederum besitzt ein Zentrierstück 33 in Form eines mit Führungsflächen 54 bis 57 ausgestatteten Zentrierklotzes, der im vorliegenden Ausführungsbeispiel pyramidenstumpfartig ausgebildet ist.

Die Anschläge 59 bis 62 sind derart gestaltet und angeordnet, daß sie beim Absetzen des Wechselbehälters der jeweiligen Lage entsprechend an den Führungsflächen 54 bis 57 der pyramidenstumpfartig geformten Zentrierklötze entlanggleiten und auf diese Weise die Wechselbehälter in der richtigen Lage in Fahrzeuglängs- und Fahrzeugquerrichtung zentrieren.

In Fig. 7 ist das pyramidenstumpfförmige Zentrierstück 33 im Falle der Beladung mit einem Normwechselbehälter 63 dargestellt. Der Wechselbehälter 63 ruht bei dieser Ausführungsform üblicherweise auf einem Hilfsrahmen 66, der durch einen Fahrgestellrahmen 67 getragen wird.

Da die Zentrierstücke 33 der Zentriereinrichtung in der Trägerfahrzeugmitte angeordnet sind, liegen sie im Freiraum 65 des Wechselbehälters 63, also in dessen Zentriertunnel. Dies bedeutet, daß die Zentrierstücke 33 den Ladevorgang mit genormten Wechselbehältern 63 nicht behindern.

Um jedoch auch eine andersartige Beladung zu ermöglichen und ggfs. Seecontainer laden zu können, ist es gemäß einer bevorzugten Ausführungsform zweckmäßig, die Zentrierstücke 33 entweder abnehmbar oder versenkbar am Hilfsrahmen 66 bzw. am Fahrgestellrahmen 67 zu befestigen.

In den Fig. 8 und 9 ist eine Verriegelungseinheit 70 der Verriegelungseinrichtung 6 der erfindungsgemäßen Befestigungsvorrichtung dargestellt. Die Verriegelungseinheit 70 weist bei der dargestellten Ausführungsform einen Verriegelungshaken 71 auf. Der Verriegelungshaken 71 ist über ein Drehgelenk 72 an einem bei der dargestellten Ausführungsform dreieckförmigen Exzenter 73 angelenkt. Der Exzenter 73 ist über ein Drehgelenk 74 an einer Lagereinrichtung 75 angelenkt, die am Fahrgestellrahmend es jeweiligen Trägerfahrzeuges an in Längsrichtung gesehen beliebiger Stelle angeordnet werden kann. Wie Fig. 8 verdeutlicht, sind die Drehgelenke 72 und 74 in zwei der Eckbereiche des Exzenters 73 angeordnet. Im dritten Eckbereich ist ein weiteres Drehgelenkt 76 vorgesehen, das mit einer in seiner Länge vorzugsweise einstellbaren Betätigungsstange 77 verbunden ist. Die Betätigungsstange 77 wiederum ist an ihrem dem Drehgelenk 76 gegenüberliegenden Ende über ein weiteres Drehgelenk 78 mit einer Lasche 79 eines Handhebels 80 verbunden. Der Handhebel 80 weist ein Griffteil 81 auf und ist an seinem abgekröpften, dem Griffteil 81 gegenüber angeordneten Ende über ein Drehgelenk 82 an der Lagereinrichtung 75 angebracht.

Auf der Lagereinrichtung 75 ist ferner ein Haltebolzen 83 in der Nachbarschaft des Exzenters 73 angeordnet, der ein Ende einer Feder 84 an der Lagereinrichtung 75 fixiert. Das andere Ende 85 der Feder 84 ist am Verriegelungshaken 71 in einem wählbaren Abstand zum Drehgelenk 72 befestigt.

Durch die zuvor beschriebene Anordnung wird eine Art Kniehebelgelenk geschaffen, mit dessen Hilfe über den Exzenter bzw. Exzenterverschluß der Verriegelungshaken 71 betätigt werden kann.

Zum Beladen werden die jeweils ausgewählten bzw. benötigten Wechselbehälter in der gewünschten Kombination auf dem jeweiligen Trägerfahrzeug 2, 3 aufgesetzt. Hierbei erfolgt die Zentrierung über die Zentriereinrichtung 4, wobei die entsprechenden Anschläge 59 bis 61 auf den Auflaufflächen 54 bis 57 des jeweiligen Zentrierstückes 33 auflaufen. Durch das Eigengewicht der Wechselbehälter werden diese zentriert und sowohl in Längs- wie auch in Querrichtung auf dem jeweiligen Trägerfahrzeuges 2, 3 fixiert. Danach wird zum Niederspannen die Verriegelungsvorrichtung betätigt. Ist diese mit Verriegelungseinheiten 70 gemäß der Darstellung der Fig. 8 und 9 versehen, wird bei jeder Einheit der Handhebel 80 von der strichpunktierten Stellung in die mit ausgezogenen Linien dargestellte Stellung überführt. Hierzu wird zunächst der aus Fig. 8 ersichtliche Verriegelungshaken 71 von der in Fig. 8 untersten Stellung in die in Fig. 8 dargestellte oberste Zwischenstellung überführt, von der er durch die Feder 84 in den Innenbereich der Profilschiene hineingezogen wird. Danach wird der Handhebel 80 um das Drehgelenk 82 von der strichpunktierten Stellung aus gedreht, so daß das Drehgelenk 78 der Betätigungsstange 77 von der strichpunktierten Stellung in die mit ausgezogenen Linien dargestellte Stellung überführt wird. Dies wiederum dreht den Exzenter 73 um sein Drehgelenk 74 von der strichpunktierten Stellung des Drehgelenkes 72 in die Stellung mit ausgezogenen Linien. Diese Drehung zieht den Verriegelungshaken 71 nach unten, so daß er den Wulst 45 umgreift, wie dies in Fig. 8 mit der Darstellung in ausgezogenen Linien verdeutlicht ist. In dieser Stellung ist die Verriegelungseinrichtung 6 betätigt und der jeweilige Wechselbehälter am Trägerfahrzeug 2 bzw. 3 fixiert. Im Bedarfsfalle ist es auch möglich, den Handhebel 80 mittels einer Verschlußeinrichtung gegen unbefugte Benutzung zu sichern.

## Patentansprüche

1. Wechselbehälter-Transporteinrichtung (1)
- mit zumindest einem Trägerfahrzeug (2, 3),
- Wechselbehältern, die auf das Trägerfahrzeug aufsetzbar sind,
- und einer Befestigungseinrichtung, die am Trägerfahrzeug angeordnet ist und eine Zentriereinrichtung (4) zum Ausrichten und Fixieren der Wechselbehälter (8 bis 12, 18 und 22 bis 26) in Fahrzeuglängs- und Fahrzeugquerrichtung sowie eine Verriegelungseinrichtung (6) zum lösbaren Festspannen der Wechselbehälter auf dem Trägerfahrzeug umfaßt,
dadurch **gekennzeichnet,**
- daß die Wechselbehälter (8 bis 12, 18 und 22 bis 26) im Bereich ihrer Unterkanten zumindest in Fahrzeuglängsrichtung mit einer geraden durchlaufenden Profilschiene (36) ausgestattet sind,
- daß die Zentriereinrichtung (4) mittig am Trägerfahrzeug und die Verriegelungseinrichtung (6) von dieser getrennt seitlich am Trägerfahrzeug angeordnet ist
- und daß die Verriegelungseinrichtung (6) an die Profilschiene über deren Länge an jeder Stelle ankoppelbar ist.

2. Befestigungseinrichtung für auf einem Trägerfahrzeug (2, 3) angeordnete Wechselbehälter (8 bis 12, 18 und 22 bis 26), dadurch
**gekennzeichnet,** daß die Befestigungseinrichtung
- aus einer mittig am Trägerfahrzeug (2, 3) befestigbaren Zentriereinrichtung (4),
- einer seitlich am Trägerfahrzeug (2, 3) befestigbaren Verriegelungseinrichtung (6)
- sowie einer geraden durchlaufenden Profilschiene (36) besteht, die am Wechselbehälter im Bereich dessen Unterkante befestigbar oder in diesen integrierbar ist, sich zumindest über dessen Länge in Trägerfahrzeuglängsrichtung erstreckt und an der die Verriegelungseinrichtung an jeder Stelle ankoppelbar ist.

3. Einrichtung nach Anspruch 1 oder 2, dadurch **gekennzeichnet,** daß die Verriegelungseinrichtung (6) aus einer Anzahl von im Abstand nebeneinander angeordneten Verriegelungseinheiten (70) besteht.

4. Einrichtung nach Anspruch 1 oder 2, dadurch **gekennzeichnet,** daß die Zentriereinrichtung (4) von einer Anzahl von Zentrierstücken (33) gebildet ist, die in Abständen entlang der Längsachse des Trägerfahrzeuges angeordnet bzw. befestigbar sind.

5. Einrichtung nach Anspruch 1 oder 2, dadurch **gekennzeichnet**, daß die Profilschienen sowohl in Fahrzeuglängs- als auch in Fahrzeugquerrichtung verlaufen und einen umlaufenden Grund- oder Bodenrahmen (5) bilden.

6. Einrichtung nach Anspruch 5, dadurch **gekennzeichnet,** daß die in Fahrzeugquerrichtung verlaufende Profilschiene (37) Anschläge (59, 60, 61, 62) aufweist, die derart angeordnet sind, daß sie sich bei aufgesetztem Wechselbehälter seitlich an der Zentriereinrichtung (4) abstützen.

7. Einrichtung nach Anspruch 5, dadurch **gekennzeichnet,** daß sich die in Fahrzeugquerrichtung verlaufende Profilschiene (37) an der Zentriereinrichtung (4) gegen Verschiebung in Fahrzeuglängsrichtung abstützt.

8. Einrichtung nach Anspruch 4, dadurch **gekennzeichnet,** daß die Zentrierstücke (33) in Form von mit Führungsflächen (54 bis 57) ausgestatteten Zentrierklötzen ausgebildet sind.

9. Einrichtung nach Anspruch 8, dadurch **gekennzeichnet,** daß die Zentrierklötze turm- oder pyramidenstumpfartig ausgebildet sind.

10. Einrichtung nach Anspruch 4, dadurch **gekennzeichnet,** daß die Zentrierstücke (33) abnehmbar oder versenkbar ausgebildet sind.

11. Einrichtung nach Anspruch 1 oder 2, dadurch **gekennzeichnet,** daß die Profilschiene (36, 37) aus einem U- oder C-Profil besteht, dessen Innenraum zur Außenseite des Wechselbehälters hin offen ist.

12. Einrichtung nach Anspruch 11, dadurch **gekennzeichnet,** daß der untere Schenkel (41) des U- oder C-Profiles kürzer ist als der obere Schenkel (42).

13. Einrichtung nach Anspruch 12, dadurch **gekennzeichnet,** daß der untere kürzere Schenkel (41) einen hochgezogenen Rand oder Wulst (45) aufweist.

14. Einrichtung nach Anspruch 3 und 11, dadurch **gekennzeichnet,** daß jede Verriegelungseinheit (70) einen Verriegelungshaken (71) aufweist, der an das U- oder C-Profil angreift.

15. Einrichtung nach Anspruch 13 und 14, dadurch **gekennzeichnet,** daß der Verriegelungshaken (71) den kürzeren Schenkel (41) des U- oder C-Profiles übergreift.

16. Einrichtung nach Anspruch 14 oder 15, dadurch **gekennzeichnet,** daß der Verriegelungshaken (71) über eine Spanneinrichtung betätigbar ist.

17. Einrichtung nach Anspruch 16, dadurch **gekennzeichnet,** daß die Spanneinrichtung einen Handhebel (80) sowie eine mit diesem verbundene Kniehebel- oder Exzenteranordnung aufweist.

18. Einrichtung nach Anspruch 14, dadurch **gekennzeichnet,** daß der Verriegelungshaken (71) nach unten umklappbar gelagert ist.

19. Einrichtung nach Anspruch 18, dadurch **gekennzeichnet,** daß der Verriegelungshaken (71) sowohl in seiner Einsatzstellung als auch in seiner nach unten geklappten Stellung unter dem Einfluß einer ihn zur Trägerfahrzeugmitte hin ziehenden Feder (84) steht.

## Claims

1. Interchangeable-container transport means (1)
- with at least one carrier vehicle (2, 3),
- interchangeable containers which can be mounted on the carrier vehicle,
- and a fastening device which is arranged on the carrier vehicle and includes a centring device (4) for aligning and fixing the interchangeable containers (8 to 12, 18 and 22 to 26) in the longitudinal and transverse directions of the vehicle as well as a locking device (6) for releasably tightening the interchangeable containers on the carrier vehicle,
characterised in that
- the interchangeable containers (8 to 12, 18 and 22 to 26) are fitted with a straight continuous profile rail (36) in the region of their lower edges at least in the longitudinal direction of the vehicle,
- the centring device (4) is arranged centrally on the carrier vehicle and the locking device (6) is arranged, separately therefrom, laterally on the carrier vehicle,
- and the locking device (6) can be coupled to the profile rail over the length thereof at any point.

2. Fastening device for interchangeable containers (8 to 12, 18 and 22 to 26) arranged on a carrier vehicle (2, 3), characterised in that the fastening device consists of
- a centring device (4) which can be fastened to the carrier vehicle (2, 3) centrally,
- a locking device (6) which can be fastened to the carrier vehicle (2, 3) laterally
- as well as a straight continuous profile rail (36) which can be fastened to the interchangeable container in the region of the lower edge thereof or integrated therein, which extends at least over the length thereof in the longitudinal direction of the carrier vehicle and to which the locking device can be coupled at any point.

3. Device according to claim 1 or 2, characterised in that the locking device (6) consists of a number of locking units (70) arranged at a distance adjacent to each other.

4. Device according to claim 1 or 2, characterised in that the centring device (4) is formed by a number of centring pieces (33) which are arranged or can be fastened at intervals along the longitudinal axis of the carrier vehicle.

5. Device according to claim 1 or 2, characterised in that the profile rails extend in both the longitudinal and the transverse directions of the vehicle and form a peripheral base or bottom frame (5).

6. Device according to claim 5, characterised in that the profile rail (37) extending in the transverse direction of the vehicle comprises stops (59, 60, 61, 62) which are arranged in such a way that, when the interchangeable container is mounted, they are supported laterally on the centring device (4).

7. Device according to claim 5, characterised in that the profile rail (37) extending in the transverse direction of the vehicle is supported on the centring device (4) against displacement in the longitudinal direction of the vehicle.

8. Device according to claim 4, characterised in that the centring pieces (33) are constructed in the form of centring blocks provided with guide surfaces (54 to 57).

9. Device according to claim 8, characterised in that the centring blocks are constructed in the form of truncated pyramids or towers.

10. Device according to claim 4, characterised in that the centring pieces (33) are made removable or retractable.

11. Device according to claim 1 or 2, characterised in that the profile rail (36, 37) consists of a U or C-profile of which the interior opens towards the outside of the interchangeable container.

12. Device according to claim 11, characterised in that the lower arm (41) of the U or C-profile is shorter than the upper arm (42).

13. Device according to claim 12, characterised in that the lower shorter arm (41) comprises a raised edge or bead (45).

14. Device according to claims 3 and 11, characterised in that each locking unit (70) comprises a locking hook (71) which engages the U or C-profile.

15. Device according to claims 13 and 14, characterised in that the locking hook (71) engages over the shorter arm (41) of the U or C-profile.

16. Device according to claim 14 or 15, characterised in that the locking hook (71) can be operated by a clamping device.

17. Device according to claim 16, characterised in that the clamping device comprises a hand lever (80) as well as a toggle lever or cam assembly connected thereto.

18. Device according to claim 14, characterised in that the locking hook (71) is mounted so that it can be folded down.

19. Device according to claim 18, characterised in that the locking hook (71) both in its working position and in its folded-down position is under the influence of a spring (84) pulling it towards the centre of the carrier vehicle.

## Revendications

1. Dispositif de transport (1) pour conteneurs interchangeables
- avec au moins un véhicule porteur (2, 3),
- des conteneurs interchangeables pouvant être placés sur le véhicule de transport,
- et un dispositif de fixation, disposé sur le véhicule de transport et comprenant un dispositif de centrage (4) destiné à orienter et fixer les conteneurs interchangeables (8 à 12, 18 et 22 à 26) dans les directions longitudinale et transversale du véhicule, ainsi qu'un dispositif de verrouillage (6) destiné à bloquer de façon amovible les conteneurs interchangeables sur le véhicule de transport,
caractérisé en ce que,
- les conteneurs interchangeables (8 à 12, 18 et 22 à 26) sont équipés, dans la zone de leurs bords inférieurs, au moins dans la direction longitudinale du véhicule, d'une glissière profilée (36) continue rectiligne,
- en ce que le dispositif de centrage (4) est disposé centralement sur le véhicule de transport et le dispositif de verrouillage (4) est disposé séparément de celui-ci, sur le côté du véhicule de transport,
- et en ce que le dispositif de verrouillage (6) peut être accouplé à la glissière profilée, à tout endroit de sa longueur.

2. Dispositif de fixation pour des conteneurs interchangeables (8 à 12, 18 et 22 à 26) disposés sur un véhicule de transport (2, 3), caractérisé en ce que le dispositif de fixation
- est composé d'un dispositif de centrage (4) pouvant être fixé centralement sur le véhicule de transport (2, 3),
- d'un dispositif de verrouillage (6) pouvant être fixé latéralement sur le véhicule de transport (2, 3),
- ainsi que d'une glissière profilée (36) continue rectiligne, pouvant être fixée sur le conteneur interchangeable dans la zone de son bord inférieur ou bien intégrée dans celui-ci, en s'étendant au moins sur sa longueur, dans la direction longitudinale du véhicule de transport; et sur lequel le dispositif de verrouillage peu être couplé en tout endroit.

3. Dispositif selon la revendication 1 ou 2, caractérisé en ce que le dispositif de verrouillage (6) est composé d'une pluralité d'unités de verrouillage (70) disposées à distance les unes à côté des autres.

4. Dispositif selon la revendication 1 ou 2, caractérisé en ce que le dispositif de centrage (4) est constitué d'une pluralité de pièces de centrage (33) susceptibles d'être disposées et/ou fixées de façon espacée les unes par rapport aux autres, le long de l'axe longitudinal du véhicule de transport.

5. Dispositif selon la revendication 1 ou 2, caractérisé en ce que les glissières profilées s'étendent tant dans la direction longitudinale du véhicule, qu'également dans la direction transversale du véhicule, et constituent un cadre de base ou de fond (5) formant pourtour.

6. Dispositif selon la revendication 5, caractérisé en ce que la glissière profilée (7) s'étendant dans la direction transversale du véhicule présente des butées (59, 60, 61, 62) disposées de telle façon qu'elles prennent appui latéralement sur le dispositif de centrage, lorsque le conteneur interchangeable est posé.

7. Dispositif selon la revendication 5, caractérisé en ce que la glissière profilée (37) s'étendant dans la direction transversale du véhicule prend appui sur le dispositif de centrage (4) pour empêcher tout déplacement dans la direction longitudinale du véhicule.

8. Dispositif selon la revendication 4, caractérisé en ce que les pièces de centrage (33) sont réalisées sous la forme de blocs de centrage, équipés de surfaces de guidage (54 à 57).

9. Dispositif selon la revendication 8, caractérisé en ce que les blocs de centrage sont réalisés à la façon de tronçons de cylindre ou de pyramide.

10. Dispositif selon la revendication 4, caractérisé en ce que les pièces de centrage (33) sont réalisées de façon à pouvoir être abaissées ou encastrées.

11. Dispositif selon la revendication 1 ou 2, caractérisé en ce que la glissière profilée (36, 37) est composée en un profilé en U ou en C, dont l'espace intérieur est ouvert en direction de la face extérieure du conteneur interchangeable.

12. Dispositif selon la revendication 11, caractérisé en ce que la branche inférieure (41) du profilé en U ou en C est plus courte que la branche supérieure (42).

13. Dispositif selon la revendication 12, caractérisé en ce que la branche inférieure (41), plus courte, présente un bord ou un bourrelet (45) relevé.

14. Dispositif selon les revendications 3 et 11, caractérisé en ce que chaque unité de verrouillage (70) présente un crochet de verrouillage (71) qui s'agrippe sur le profilé en U ou en C.

15. Dispositif selon les revendications 13 et 14, caractérisé en ce que le crochet de verrouillage (71) enchâsse la branche courte (41) du profilé en U ou en C.

16. Dispositif selon la revendication 14 ou 15, caractérisé en ce que le crochet de verrouillage (71) peut être actionné par l'intermédiaire d'un dispositif de tension.

17. Dispositif selon la revendication 16, caractérisé en ce que le dispositif de tension présente un levier à main (80), ainsi qu'un dispositif à genouillère ou à excentrique lui étant relié.

18. Dispositif selon la revendication 14, caractérisé en ce que le crochet de verrouillage (71) est monté de façon à pourvoir être rabattu vers le bas.

19. Dispositif selon la revendication 18 caractérisé en ce que le crochet de verrouillage (71) est placé, tant dans sa position d'utilisation, qu'également dans sa position rabattue vers le bas, sous l'influence d'un ressort (84) qui le tire vers le centre du véhicule de transport.
